# EUROPÄISCHE PATENTANMELDUNG

(11) **EP 1 746 831 A2**
(43) Veröffentlichungstag der Anmeldung: **24.01.2007**
(21) Anmeldenummer: 06013781.7
(22) Anmeldetag: 04.07.2006
(51) Int. Cl.: H04N 7/16, H04N 7/167

(54) **Verfahren zur verschlüsselten Übertragung von Information über einen Fernsehkanal**

(30) Priorität: 04.07.2005 AT 11202005
(71) Anmelder: F5 Programmentwicklung GmbH, 1140 Wien (AT)
(72) Erfinder: Hackenberg, Harald, 1140 Wien (AT)
(74) Vertreter: Margotti, Herwig Franz

(57) **Zusammenfassung**

Ein Verfahren zur verschlüsselten Übertragung von Information über einen Fernsehkanal umfasst a) das graphische Zerlegen der Information (INF) in zwei Teilgraphiken (TG1, TG2); b) das Einblenden einer Teilgraphik (TG1) in einen vorgegebenen Bildbereich (B1) eines Fernsehbildes (TV); c) das Generieren einer Teletextseite (TX), in der die zweite Teilgraphik (TG2) in einem Teletext-Bereich (B2) eingefügt wird, der jenem Bildbereich (B1) des Fernsehbildes (TV) überlagerbar ist, in dem die erste Teilgraphik (TG1) eingeblendet wird; d) das Übertragen des Fernsehbildes (TV(TG1)) und der Teletextseite (TX(TG2)) über einen Fernsehkanal (K1). Die verschlüsselte Information kann entschlüsselt werden, indem das die erste Teilgraphik (TG1) Fernsehbild (TV(TG1)) auf einem Bildschirm eines Fernsehgeräts angezeigt wird und zusätzlich die die zweite Teilgraphik (TG2) enthaltende Teletextseite (TX(TG2)) eingeblendet wird.

## Beschreibung

Die Erfindung betrifft ein Verfahren zur verschlüsselten Übertragung von Information über einen Fernsehkanal.

Die Erfindung betrifft weiters ein Verfahren zur Entschlüsselung einer verschlüsselt über einen Fernsehkanal übertragenen Information.

Die Erfindung betrifft weiters eine Vorrichtung zum Weiterleiten von verschlüsselt über einen Fernsehkanal übertragenen und in einem Fernsehgerät empfangenen und entschlüsselten Information.

Es besteht die Notwendigkeit, Information über einen allgemein zugänglichen Fernsehkanal auf eine Weise zu übertragen, dass sie entweder nur von einem beschränkten Zuseherkreis und/oder nur zu bestimmten Zeiten gesehen werden kann. Zusätzlich soll die Manipulierbarkeit oder der Missbrauch dieser Information weitgehend verhindert werden. Weiters soll das Anzeigen der Information auf dem Bildschirm eines Fernsehgeräts zu keiner oder bloß geringer Beeinträchtigung des TV-Programms führen.

Es sind so genannte "Set-top-Boxen" bekannt, die einem Fernsehgerät vorgeschaltet sind und verschlüsselte Fernsehsignale empfangen, die in der Set-top-Box entschlüsselt und in entschlüsselter Form an den Fernsehsignaleingang des Fernsehgeräts geführt werden. Nachteilig an diesen bekannten Geräten ist, dass sie der Benutzer als ein zusätzliches Gerät erwerben oder mieten muss, das Stellplatz in der Nähe des Fernsehgeräts benötigt, das Verkabelungsaufwand zur Verbindung mit dem Fernsehgerät und einem Stromanschluss benötigt, und das vom Benutzer eingerichtet und bedient werden muss. Vielfach ist es auch unerwünscht oder unnotwendig, das gesamte zu übertragende Fernsehsignal zu verschlüsseln, sondern man möchte vielmehr zusätzliche Information mit dem Fernsehprogramm mitsenden, wobei nur diese zusätzliche Information verschlüsselt sein soll.

Die vorliegende Erfindung löst die geschilderten Probleme durch ein Verfahren zur verschlüsselten Übertragung von Information über einen Fernsehkanal mit dem Merkmalen des Anspruchs 1 und durch ein Verfahren zur Entschlüsselung einer gemäß dem erfindungsgemäßen Verschlüsselungsverfahren über einen Fernsehkanal übertragenen Information. Vorteilhafte Ausgestaltungen der Erfindung sind in den Unteransprüchen dargelegt.

Die vorliegende Erfindung ist vielfältig einsetzbar. Sie ist insbesondere ohne zusätzliche zuseherseitige Hardware sofort implementierbar, da sie auf der Empfangsseite mit einem herkömmlichen, zum Teletextempfang ausgebildeten Fernsehgerät das Auslangen findet. Somit ist die Erfindung von mehr als 2/3 der Fernsehzuseher unmittelbar nutzbar. Die Implementierung der Erfindung erfolgt senderseitig, wobei bei der Implementierung im Wesentlichen auf vorhandene Systeme zum Einblenden von Graphik in Fernsehbilder und zum Erzeugen von Teletextseiten aufgesetzt werden kann, deren Funktion erfindungsgemäß erweitert wird. Die Erfindung bietet damit eine zentrale, senderseitige Logik und Administration. Die Erfindung ist weiters zeitnah verwendbar, dass heißt, verschlüsselte Information kann jederzeit und ohne nennenswerte Verzögerung übertragen werden. Das erfindungsgemäße Verschlüsselungsverfahren schließt auch weitgehend Missbrauch und Manipulation der verschlüsselt übertragenen Information aus. Schließlich führt die in das Fernsehbild eingeblendete Teilgraphik zu keiner nennenswerten Beeinträchtigung des TV-Programms, da sie unauffällig an einem Bildschirmrand platziert werden kann. Es sei nur nebenbei erwähnt, dass in den meisten TV-Programmen bereits seit langem auch Senderkennungen eingeblendet werden, die die Zuseher in keiner Weise stören. Die gemäß der Erfindung eingeblendete Teilgraphik kann noch wesentlich unauffälliger im Fernsehbild platziert werden als eine Senderkennung.

In einer Ausgestaltung der Erfindung wird Information, die ursprünglich nicht als Grafik vorliegt, z.B. digitale Nummern oder Buchstaben, vor dem graphischen Zerlegen als Graphik aufbereitet.

Um bei der Entschlüsselung der übertragenen Information am Fernseher keine Beeinträchtigung der Sichtbarkeit des TV-Programms zu verursachen, ist in einer bevorzugten Ausgestaltung der Erfindung die Teletextseite als durchsichtige Basisseite konfiguriert, in die die zweite Teilgraphik eingefügt wird.

Es ist zumeist nicht erforderlich, dass die verschlüsselte Information ständig mit dem Fernsehsignal übertragen wird. Vielmehr genügt es oder ist in manchen Anwendungsfällen sogar erwünscht, dass die erste Teilgraphik nur in Intervallen in das Fernsehbild eingeblendet wird, z.B. in regelmäßigen Zeitabständen, oder am Beginn, in der Mitte und/oder am Ende einer Fernsehsendung, oder zu bestimmten Uhrzeiten.

Um sicherzustellen, dass die verschlüsselt übertragene Information nur autorisierten Benutzern zugänglich ist, ist weiters vorgesehen, dass die Teletextseite mit einer Seitennummer versehen ist, unter der sie am Fernsehgerät aufrufbar ist, die nur autorisierten Benutzern bekannt gemacht wird.

Die vorliegende Erfindung ist vielfältig verwendbar. Sie dient prinzipiell dazu, Information als Graphik verschlüsselt zu übertragen und auf diese Weise weitgehend manipulationssicher einem autorisierten Benutzerkreis zugänglich zu machen. Beispielsweise ist mittels der erfindungsgemäßen Übertragung der beiden Teilgraphiken, die nur in Überlagerung einen Informationsgehalt aufweisen, auf zwei unterschiedlichen Kommunikationswegen (TV-Bild und Teletextseite) eine vom Fernsehsender gesteuerte Nutzungskontrolle möglich, die ergibt, ob und wann ein Zuschauer ein bestimmtes Fernsehprogramm verfolgt. Denn einerseits ist der entschlüsselte Inhalt der Information nur zu genau jenem Zeitpunkt für den Benutzer am Bildschirm erkennbar, an dem die erste Teilgraphik im Fernsehbild dargestellt wird und andererseits muss zusätzlich eine manuelle Intervention seitens des TV-Zuschauers erfolgen, um gleichzeitig die entsprechende Teletextseite, in der die zweite Teilgraphik enthalten ist, zur Überlagerung aufzurufen. Bei der sich aus dem Fernsehbild und der gleichzeitig am Bildschirm überlagerten Teletextseite ergebenden Information kann es sich beispielsweise um eine Ziffernfolge handeln, die der Zuschauer in weiterer Folge als Telefonnummer zu wählen oder in ein anderes, entsprechend geeignetes Gerät einzugeben hat. Ein solches Gerät kann ein Handy oder etwa ein Computer sein, jedoch auch ein nachfolgend beschriebenes, speziell für die vorliegende Erfindung konzipiertes Gerät. Durch die Eingabe der entschlüsselten Information in das Gerät und (automatische) Übertragung an einen bestimmten Empfänger ist gegenüber dem TV-Sender oder gegenüber einem Dritten eine Bestätigung darüber erfolgt, dass der Benutzer zum Zeitpunkt der Informationsübermittlung das TV-Programm des Senders konsumiert hat.

Die erfindungsgemäße Vorrichtung zum Weiterleiten von verschlüsselt über einen Fernsehkanal übertragener und in einem Fernsehgerät empfangener und entschlüsselter Information umfasst Eingabemittel zum Eingeben der Information, z.B. eine Tastatur, einen Speicher zum Zwischenspeichern der Information und Datenkommunikationsmittel zum Übertragen der Information über ein Datenkommunikationsnetzwerk. Die Übertragung der eingegebenen Information kann somit zeitversetzt erfolgen, d.h. die Vorrichtung muss nicht ständig mit dem Datenkommunikationsnetzwerk verbunden sein. Um auch bei zeitversetztem Übertragen der Information kontrollieren zu können, wann die Information vom Benutzer in die Vorrichtung eingegeben wurde, ist vorzugsweise ein Timer zum Erzeugen eines Zeitstempels vorgesehen, der zusammen mit der Information im Speicher zwischengespeichert wird.

Die Erfindung wird nun anhand von nicht einschränkenden Ausführungsbeispielen unter Bezugnahme auf die Zeichnungen näher erläutert. In den Zeichnungen zeigen Fig. 1 ein Flussdiagramm des erfindungsgemäßen Verschlüsselungs- und Entschlüsselungsverfahrens, Fig. 2 schematisch ein beim Verschlüsseln erzeugtes Fernsehbild und eine Teletextseite, und Fig. 3 ein Blockschaltbild einer erfindungsgemäßen Vorrichtung zur Weiterleitung entschlüsselter Information.

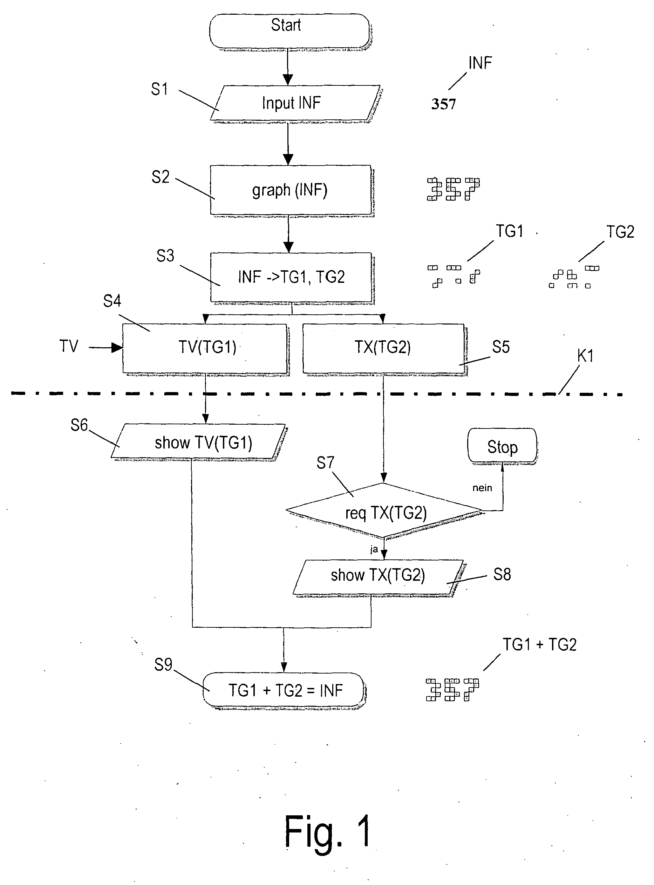

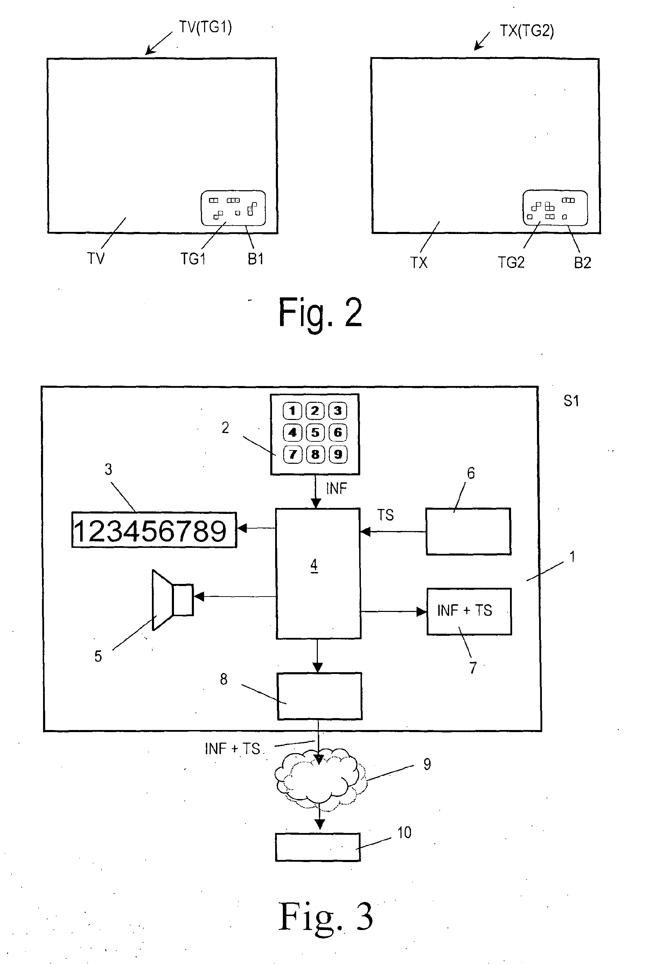

Zunächst auf das Flussdiagramm in Fig. 1 Bezug nehmend, werden das erfindungsgemäße Verschlüsselungsverfahren und Entschlüsselungsverfahren gemeinsam beschrieben. Beim Verfahren zur verschlüsselten Übertragung von Information über einen Fernsehkanal erfolgt in Schritt S1 die Eingabe der zu verschlüsselnden Information INF, wobei der Begriff "Eingabe" allgemein zu verstehen ist und die Information INF beispielsweise aus einem Speicher eingelesen wird. Als Beispiel wird angenommen, dass die Information INF die Zahl 357 umfasst. Sofern die Information INF nicht bereits in einem passenden Graphikformat vorliegt, wird sie in Schritt S2 in eine Graphik umgewandelt. In Schritt S3 erfolgt das Zerlegen der (graphischen) Information INF in zwei Teilgraphiken TG1 bzw. TG2, die für sich allein genommen keinen Informationsgehalt aufweisen, aus dem die Information INF ermittelbar wäre. Die erste Teilgraphik TG1 wird in Schritt S5 in einen vorgegebenen Bildbereich B1 eines Fernsehbildes TV eingeblendet (siehe auch den linken Teil von Fig. 2, der das kombinierte Fernsehbild TV(TG1) darstellt). Die zweite Teilgraphik TG2 wird in eine speziell zu diesem Zweck generierte Teletextseite TX eingefügt (siehe rechten Teil von Fig. 2), und zwar in einem Teletext-Bereich B2, der in seiner Lage exakt dem Bildbereich B1 des Fernsehbildes TV(TG1) entspricht, in dem die erste Teilgraphik TG1 eingeblendet ist. Sowohl das Fernsehbild TV(TG1) als auch die Teletextseite TX(TG2) werden über einen Fernsehkanal K1 übertragen und sind an einem nicht dargestellten Fernsehgerät empfangbar.

Zur Entschlüsselung der verschlüsselt übertragenen Information wird das Fernsehbild TV(TG1) mit eingeblendeter Teilgraphik TG1 an einem Fernsehbildschirm angezeigt (Schritt S6). Damit die Information INF durch einen Zuseher entschlüsselt werden kann, muss dieser Zuseher die Teletextseite TX(TG2) mit eingeblendeter Teilgraphik TG2 abrufen (Schritt S7). Ist dies nicht möglich, entweder, weil die Seite nicht abrufbereit ist oder weil der Zuseher nicht die richtige Nummer der Teletextseite TX(TG2) kennt, so scheitert die Entschlüsselung ("Stop" im Flussdiagramm). Ist die Teletextseite TX(TG2) jedoch wie gewünscht abrufbar, so wird sie am Fernsehbildschirm angezeigt, indem sie dem Fernsehbild TV(TG1) überlagert wird. Man macht sich dabei eine Funktionalität von Teletext zunutze, wonach Teletextseiten neben der Darstellung von Zeichen in acht Grundfarben Bildteile auch "durchsichtig" darstellen können. Die Basisteletextseite TX weist so einen durchsichtigen Bereich auf (oder ist zur Gänze durchsichtig), in dem die Teilgraphik TG2 eingefügt ist. Wird nun die Teletextseite TX(TG2) aufgerufen, so überlagert sie zwar das Fernsehbild TV(TG1), da jedoch zumindest ein Teil der Teletext-Seite TX(TG2) durchsichtig ist, verdeckt er nicht das Fernsehbild TV(TG1), sondern es überlagern sich nur die beiden Teilgraphiken TG1 und TG2 und ergänzen einander dabei zur Information INF (Schritt S9), die vom Betrachter optisch so wahrgenommen wird, dass die ursprüngliche Information INF in ihrer graphischen Darstellung unverschlüsselt erscheint.

Kennzeichnend für das erfindungsgemäße Verfahren ist, dass ein Zuschauer, der nur das TV-Programm verfolgt, d.h. der nur die Fernsehbilder TV(TG1) sieht, aus diesen Fernsehbildern TV(TG1) nicht auf die ursprüngliche Information INF rückschließen kann. Ebenso wenig kann aus dem alleinigen Betrachten der Teletextseite TX(TG2) (ohne Überlagerung des TV-Bilds, bzw. zu einem anderen Zeitpunkt als jenem, zu dem die erste Teilgraphik TG1 mit dem TV-Bild TV ausgestrahlt wird) die Information INF rekonstruiert werden. Das vorgeschlagene Verschlüsselungsverfahren ist weitgehend manipulationssicher, da durch die optische Verschlüsselung eine automatische Entschlüsselung (d.h. etwa durch einen Computer) nur mit einem, Laien im Allgemeinen nicht möglichen, Aufwand zu erreichen wäre. Es ist also weitgehend sichergestellt, dass nur ein Mensch die Information entschlüsselt wahrnehmen kann.

Durch die getrennte Übertragung der Teilgraphiken TG1 und TG2 auf zwei unterschiedlichen Kommunikationswegen (TV-Bild bzw. Teletextseite) lässt sich beispielsweise effizient kontrollieren, ob und wann ein Zuschauer das Programm verfolgt. Denn einerseits ist der unverschlüsselte Inhalt der Information INF nur zu genau jenem Zeitpunkt erkennbar, an dem die Teilgraphik TG1 im Fernsehbild TV1(TG1) dargestellt wird, und andererseits ist die Interaktion des TV-Zuschauers nötig, um die korrespondierende Teletextseite TX(TG2) aufzurufen. Bei der aus TV-Bild und gleichzeitig dargestellter Teletextseite sich ergebenden Information INF kann es sich beispielsweise um eine Ziffernfolge handeln, die der Zuschauer in weiterer Folge als Telefonnummer zu wählen oder in ein anderes, entsprechend geeignetes, Gerät einzugeben hat. Ein solches Gerät kann ein Handy oder etwa ein Computer, vorzugsweise jedoch die nachfolgend beschriebene erfindungsgemäße Vorrichtung zum Weiterleiten der empfangenen Information INF an eine Auswertestelle, wie z.B. ein Telefonserver, sein. Durch die Eingabe der entschlüsselten Information INF in die erfindungsgemäße Vorrichtung und Rückübermittlung an die Auswertestelle ist gegenüber dem TV-Sender oder gegenüber einem Dritten eine Bestätigung darüber erfolgt, dass zum Zeitpunkt der Übermittlung der Information INF an die Auswertestelle das TV-Programm des Senders konsumiert wurde.

Die in Fig. 3 in einem schematischen Blockschaltbild dargestellte erfindungsgemäße Vorrichtung 1 zum Weiterleiten der verschlüsselt über einen Fernsehkanal übertragenen und in einem Fernsehgerät empfangenen und entschlüsselten Information INF umfasst Eingabemittel 2, z.B. eine Tastatur, zum Eingeben der Information INF, um sie durch einen Prozessor 4 zu verarbeiten. Weiters umfasst die Vorrichtung 1 einen Speicher 7 zum Zwischenspeichern der eingegebenen Information INF, ein Display 3 und einen Lautsprecher 5 zum Anzeigen von optischer und akustischer Information, einen Timer 6 zum Erzeugen eines Zeitstempels, und Datenkommunikationsmittel 8 zum Übertragen der Information INF über ein Datenkommunikationsnetzwerk 9 an eine Auswertestelle 10. Der Prozessor 4 steuert alle Funktionen der Vorrichtung 1. Wenn über die Eingabemittel 2 Information INF eingegeben wird, holt der Prozessor 4 vom Timer 6 einen Zeitstempel TS und speichert die Information INF in Verknüpfung mit dem Zeitstempel TS im Speicher 7 ab. Es sei erwähnt, dass eine Vielzahl von Informationen INF im Speicher 7 abgelegt werden können. Durch die Zwischenspeicherung der Information INF im Speicher 7 kann sie zu einem späteren Zeitpunkt über die Datenkommunikationsmittel 8 und das Datenkommunikationsnetzwerk 9 an die Auswertestelle 10 übertragen werden, beispielsweise als DTFM - Tonfolge via Telefon, wenn das Datenkommunikationsnetzwerk 9 als Telefonnetz ausgebildet ist. Alternativ oder ergänzend dazu ist auch eine Übertragung der Information INF mit den Zeitstempel TS über das Internet oder per SMS vorgesehen.

## Patentansprüche

1. Verfahren zur verschlüsselten Übertragung von Information über einen Fernsehkanal, **gekennzeichnet durch**
a) das graphische Zerlegen der Information (INF) in zwei Teilgraphiken (TG1, TG2),
b) das Einblenden einer Teilgraphik (TG1) in einen vorgegebenen Bildbereich (B1) eines Fernsehbildes (TV),
c) das Generieren einer Teletextseite (TX), in der die zweite Teilgraphik (TG2) in einem Teletext-Bereich (B2) eingefügt wird, der jenem Bildbereich (B1) des Fernsehbildes (TV) überlagerbar ist, in dem die erste Teilgraphik (TG1) eingeblendet wird, und
d) das Übertragen des Fernsehbildes (TV(TG1)) und der Teletextseite (TX(TG2)) über einen Fernsehkanal (K1).

2. Verschlüsselungsverfahren nach Anspruch 1, **dadurch gekennzeichnet, dass** die Information (INF) vor dem graphischen Zerlegen als Graphik aufbereitet wird.

3. Verschlüsselungsverfahren nach Anspruch 1 oder 2, **dadurch gekennzeichnet, dass** die Teletextseite (TX) als durchsichtige Basisseite konfiguriert ist, in der die zweite Teilgraphik (TG2) eingefügt wird.

4. Verschlüsselungsverfahren nach einem der vorhergehenden Ansprüche, **dadurch gekennzeichnet, dass** die erste Teilgraphik (TG1) in Intervallen in das Fernsehbild (TV) eingeblendet wird.

5. Verfahren zur Entschlüsselung einer gemäß dem Verfahren nach einem der Ansprüche 1 bis 4 verschlüsselt über einen Fernsehkanal übertragenen Information, **gekennzeichnet durch** das Anzeigen des Fernsehbildes (TV(TG1)) auf einem Bildschirm eines Fernsehgeräts und das zusätzliche Einblenden der Teletextseite (TX(TG2)).

6. Entschlüsselungsverfahren nach Anspruch 5, **dadurch gekennzeichnet, dass** die Teletextseite (TX(TG2)) mit einer Seitennummer versehen ist, die nur autorisierten Benutzern bekannt gemacht wird.

7. Vorrichtung (1) zum Weiterleiten von durch das Verschlüsselungsverfahren gemäß einem der Ansprüche 1 bis 4 verschlüsselter, über einen Fernsehkanal (K1) verschlüsselt übertragener und in einem Fernsehgerät empfangener und durch das Entschlüsselungsverfahren gemäß Anspruch 5 oder 6 entschlüsselter Information (INF), **gekennzeichnet durch** Eingabemittel (2) zum Eingeben der Information (INF), einen Speicher (7) zum Zwischenspeichern der Information (INF) und Datenkommunikationsmittel (8) zum Übertragen der Information (INF) über ein Datenkommunikationsnetzwerk (9) an eine Auswertestelle (10).

8. Vorrichtung nach Anspruch 7, **gekennzeichnet durch** einen Timer (6) zum Erzeugen eines Zeitstempels (TS), der zusammen mit der Information (INF) im Speicher (7) zwischengespeichert und über die Datenkommunikationsmittel (8) an die Auswertestelle (10) übertragen wird.
